Europäisches Patentamt

European Patent Office

Office européen des brevets

(11) Publication number: **0 059 058**
**B1**

(12) **EUROPEAN PATENT SPECIFICATION**

(45) Date of publication of patent specification: **19.09.84**

(51) Int. Cl.³: **E 04 B 1/60, E 06 B 3/62**

(21) Application number: **82300759.6**

(22) Date of filing: **16.02.82**

(54) **Building system.**

(30) Priority: **21.02.81 GB 8105556**

(43) Date of publication of application:
**01.09.82 Bulletin 82/35**

(45) Publication of the grant of the patent:
**19.09.84 Bulletin 84/38**

(84) Designated Contracting States:
**AT BE CH DE FR IT LI LU NL SE**

(56) References cited:
**DE-A-2 022 314**
**DE-U-8 101 010**
**GB-A-1 291 273**
**GB-A-2 023 703**
**US-A-4 067 155**

(73) Proprietor: **Reynolds, Donald Arthur**
**Gypsy Mead Westcliffe Avenue**
**Baildon Shipley West Yorkshire (GB)**

(72) Inventor: **Reynolds, Donald Arthur**
**Gypsy Mead Westcliffe Avenue**
**Baildon Shipley West Yorkshire (GB)**

(74) Representative: **Wharton, Peter Robert et al**
**P.R. WHARTON & CO. 11th Floor Tower House**
**Merrion Way**
**Leeds LS2 8PB West Yorkshire (GB)**

Courier Press, Leamington Spa, England.

## Description

This invention relates to a system for the construction of buildings.

In our published U.K. Patent Specification No. 2,023,703A there is disclosed an arrangement for mounting infills, that is glass panes, construction panels or the like, to provide the external cladding of a building. In that arrangement, each infill is mounted within a framework which is attached to the main structural framework, or "steelwork", of the building to be clad. Thus the steelwork must be strong enough to carry the cladding and its framework as well as supporting the building and its conventional internal wall finish, e.g. plaster.

US—A—4067155 discloses a sealing system for joining and adhering a pair of abutting panels to a rigid substrate. The system includes a receptacle member which is firmly attached to the substrate and includes a channel for receiving and gripping a resilient member which holds the pair of panels to the rigid substrate. The "rigid substrate" is a corrugated wall member and thus the abutting panels provide a cladding for one surface only, in similar manner to the infills in the above referred to GB—A—2023703.

The present invention provides a simplified form of building construction which allows a building to be erected extremely quickly and economically.

According to the present invention there is provided a building system which comprises framework members attached to the structural steelwork of a building for supporting a wall formed of infill members held in place by flexible gaskets characterised in that each member is of a thickness at least equal to that of the wall, has a shoulder capable of receiving an infill of thickness corresponding to that of the member, and has a channel parallel with the shoulder shaped to receive and grip the foot of the flexible gasket, the gasket having a limb extending over the shoulder to bear against the infill, and the infill providing both internal and external wall finishes.

Thus, a building may be constructed according to the invention by erecting a minimum of structural steelwork, roofing the steelwork, fixing framework members, and mounting infills within the framework to form the walls of the building.

By "infill" is meant a construction panel, glazing unit, or the like, capable of being used as cladding for a building. The infill is of a thickness corresponding to the frame member and, if not solid, should be manufactured with appropriate internal spacing so as to produce a unit of the correct thickness. The actual construction of the infill can vary widely according to specification and cost to enable a wide variety of external appearances, heat and sound insulating qualities, and so forth, to be obtained.

A building constructed according to the invention is relatively inexpensive since the system is extremely light, thereby enabling structural steelwork to be reduced in quantity and size, and building labour is reduced owing to the prefabrication of the infill panels. Furthermore, the so-called "wet trades", for example brick laying, plastering, rendering, and the like, are virtually eliminated. Infills are inter-changeable thereby giving flexibility in the positioning of window, entrances and the like. Similarly, buildings are easily extended should the need arise. A further advantage with the system of the invention is that the walls can be assembled extremely quickly thus weatherproofing the interior of the building in a short time allowing internal work to be carried out under cover unaffected by the elements.

The invention will be described further, by way of example, with reference to the accompanying drawings, in which:

Figure 1 is a perspective view of part of a system according to the invention;

Figure 2 is an exploded view corresponding to Figure 1; and

Figure 3 is a sectional view of another embodiment of the invention.

Referring to the drawings, a frame member 10, fixed between adjacent structural steel work units, has shoulders 12 capable of receiving infills 14 and channels 16 shaped to receive and grip the foot 18 of flexible gasket 20. Each gasket 20 has a limb 22 which, in use, extends over the shoulder to bear against the outer face 24 of each infill 14.

The member 10 illustrated in the drawings is horizontal, but it will be appreciated that vertical framework members are similarly formed. To assemble a building, a framework of structural steelwork is constructed capable of supporting a roof and floors as appropriate. The framework members 10 may be made from a suitable construction material such as aluminium and are fixed between adjacent structural units. Infills 14 are then placed on the shoulders 12 of the members 10 and gaskets 20 positioned so as to bear against the infills 14 and hold them firmly in position. The foot 18 of each gasket 20 has saw tooth indentations which co-operate with corresponding indentations within the channel 16 thereby locking the gasket 20, and consequently the infill 14, in place on the frame member 10. Each infill 14 may be a construction panel or glazing unit according to specifications. The infill 14 may contain doorways or windows within it.

Between each shoulder 12 of the frame member 10 there is a gap 26. In order to give an aesthetically pleasing appearance to the inside of the finished building, a blanking member 28 may be provided which locates and fixes within the gap 26. The exterior appearance of the member 28 will be of such texture and colour as to fit in with the interior appearance of the infills 14. For a building, such as a garage or warehouse, in which the interior appearance is unimportant, the members 28 may be omitted entirely.

The gasket 22 may be made of a suitable material such as "Neoprene" rubber and this preferably is of a similar construction to the gasket described in our aforementioned specification No. 2,023,703A.

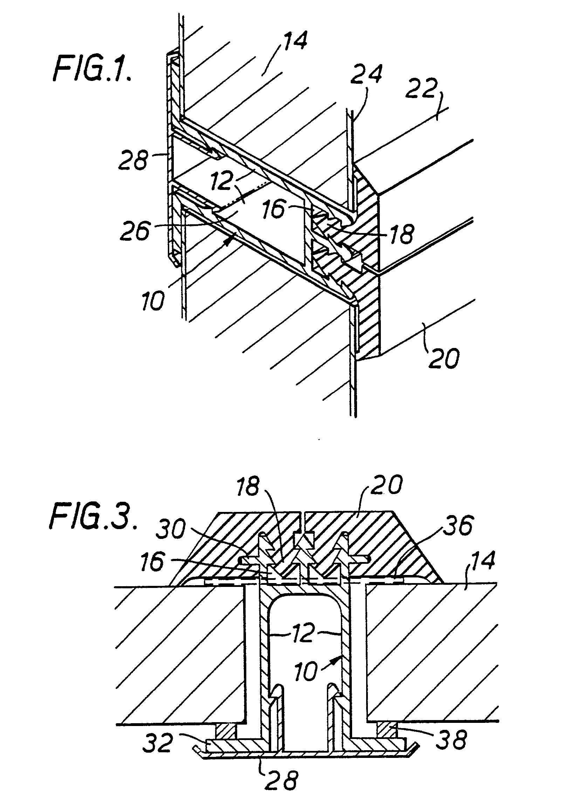

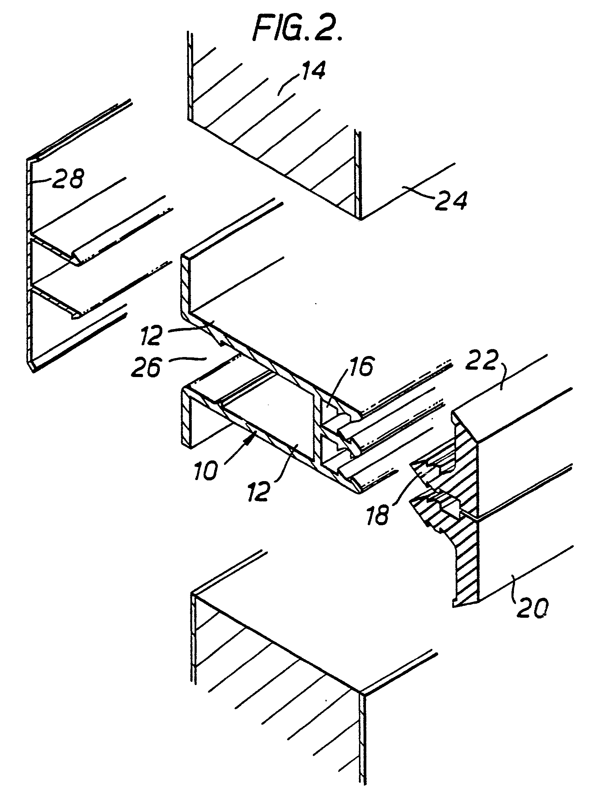

Referring now to Figure 3, another embodiment of the invention is illustrated. As can be seen this is broadly similar to the embodiment shown in Figures 1 and 2 but there are some differences of detail. Like numerals have been used to denote like parts. In this construction the sidewalls of the channels 16 carry a projection 30 parallel to the shoulder portion 32 of the member 10. The projections 30 fit into corresponding grooves within the gaskets 20 and serve to provide increased rigidity over and above the cantilever effect already described.

For certain applications, building regulations require that the infills 14 be held in place by means additional to the gaskets 20 which could possibly be destroyed in conditions of intense heat, for example during a fire. Consequently provision may be allowed for the insertion of rods or plates 36 through corresponding holes in the sidewalls of the channels 16. The rods or plates 36 will be constructed of, for example, a suitable metal so as to meet the necessary fire requirements. The gaskets 20 will continue to. be the principal means of retaining the infills, the rods or sheets 36 only coming into play in the case of destruction of the gaskets by fire. Also illustrated in Figure 3 is the use of setting strips or blocks 38 which are employed when the thickness of the infill 40 is slightly less than the width of the frame member 10, to take up the gap.

## Claims

1. A building system which comprises framework members (10) attached to the structural steelwork of a building for supporting a wall formed of infill members (14) held in place by flexible gaskets (20) characterised in that each member (10) is of a thickness at least equal to that of the wall, has a shoulder (12) capable of receiving an infill (14) of thickness substantially corresponding to that of the member (10), and has a channel (16) parallel with the shoulder (12) shaped to receive and grip the foot (18) of the flexible gasket (20), the gasket (2) having a limb (22) extending over the shoulder (12) to bear against the infill (14), and the infill (14) providing both internal and external (24) wall finishes.

2. A system as claimed in claim 1 in which the gasket (20) is made from a synthetic rubber.

3. A system as claimed in claim 2 in which the synthetic rubber is an alkylene rubber.

4. A system as claimed in claims 1 to 3 in which the infill (14) is of a somewhat smaller thickness from the frame member (10) and setting strips or blocks (38) are employed to take up the gap.

5. A system as claimed in any one of claims 1 to 4 in which the infill (14) is a construction panel or glazing unit.

6. A system as claimed in any one of claims 1 to 5 in which a blanking member (28) is provided to fit on the internal face of the framework (10), after the infill is in place, so as to provide a neat finish.

## Revendications

1. Système de construction, qui comprend des éléments de châssis (10) fixés à l'ossature structurelle d'un bâtiment pour supporter un mur constitué d'éléments de remplissage (14) tenus en place par des joints flexibles (20) caractérisé en ce que chaque élément (10) est d'une épaisseur au moins égale à celle du mur, présente un épaulement (12) qui peut recevoir un remplissage (14) d'épaisseur correspondant sensiblement à celle de l'élément (10), et comporte un canal (16) parallèle à l'épaulement (12) et profilé pour recevoir et serrer le pied (18) du joint flexible (20), le joint (20) ayant une aile (22) qui s'étend au-delà de l'épaulement (12) de façon à s'appliquer contre le remplissage (14), et le remplissage (14) constituant à la fois les finitions intérieure et extérieure (24) des murs.

2. Système suivant la revendication 1, caractérisé en ce que le joint (20) est en caoutchouc synthétique.

3. Système suivant la revendication 2, dans lequel le caoutchouc synthétique est un caoutchouc d'alkylène.

4. Système suivant les revendications 1 à 3, dans lequel le remplissage (14) est d'une épaisseur un peu plus faible que celle de l'élément de châssis (10) et des bandes ou blocs de réglage (38) sont utilisés pour compenser le jeu.

5. Système suivant l'une quelconque des revendications 1 à 4, dans lequel le remplissage (14) est un panneau de construction ou un vitrage.

6. Système suivant l'une quelconque des revendications 1 à 5, dans lequel une pièce de recouvrement (28) est prévue pour se monter sur la face intérieure de l'élément de châssis (10), après mise en place du remplissage, de façon à procurer une finition nette.

## Patentansprüche

1. Bausystem mit Rahmenteilen (10), die am Buastahlgerippe eines Gebäudes angebracht sind, um eine aus Einsatzteilen (14) gebildete Wand zu tragen, die mit elastischen Dichtungen (20) in ihrer Stellung gehalten sind, dadurch gekennzeichnet, daß jedes Rahmenteil (10) eine Dicke besitzt, die zumindest gleich der der Wand ist, eine Schulter (12) aufweist, die zur Aufnahme eines Einsatzes (14) mit einer Dicke geeignet ist, die im wesentlichen der des Rahmenteiles (10) entspricht, sowie mit einem Kanal (16) parallel zu der Schulter (12) mit einer Form versehen ist, um den Fuß (18) der elastischen Dichtung (20) aufzunehmen und zu erfassen, wobei die Dichtung (20) einen Schenkel (22) besitzt, der sich über die Schulter (12) erstreckt und gegen den Einsatz (14) andrückt, und wobei der Einsatz (14) sowohl das Innenwand- als such das Außenwandfinish (24) bildet.

2. System nach Anspruch 1, dadurch gekennzeichnet, daß die Dichtung (20) aus synthetischem Kautschuk besteht.

3. System nach Anspruch 2, dadurch gekennzeichnet, daß der synthetische Gummi ein Alkylenkautschuk ist.

4. System nach Anspruch 1 bis 3, dadurch gekennzeichnet, daß der Einsatz (14) eine etwas geringere Dicke als das Rahmenteil (10) besitzt und daß Befestigungsstreifen oder -blöcke (38) zur Ausfüllung des Spaltes verwendet sind.

5. System nach einem der Ansprüche 1 bis 4, dadurch gekennzeichnet, daß der Einsatz (14) ein Bauplatte oder eine Verglasungseinheit ist.

6. System nach einem der Ansprüche 1 bis 5, dadurch gekennzeichnet, daß ein Verblendungsteil (28) vorgesehen ist, das auf die Innenseite des Rahmenteiles (10) paßt, nachdem sich der Einsatz in seiner Position befindet, um ein ansprechendes Finish zu liefern.

FIG.1.

FIG.3.

0 059 058

# FIG.2.

2